# FASCICULE DE BREVET EUROPEEN

(11) **EP 0 936 425 B1**
(45) Date de publication et mention de la délivrance du brevet: **07.01.2004**
(21) Numéro de dépôt: 98400338.4
(22) Date de dépôt: 13.02.1998
(51) Int. Cl.: F25B 45/00

(54) **Procédé de régénération d'un fluide pollué et installation pour la mise en oeuvre du procédé**
Verfahren zur Regenerierung einer verunreinigten Flüssigkeit und Vorrichtung zur Durchführung des Verfahrens
Process for regenerating a polluted liquid and an installation for carrying out this process

(43) Date de publication de la demande: 18.08.1999
(73) Titulaire: Dehon S.A., 75011 Paris (FR)
(72) Inventeur: Crouzet, René, 93360 Neuilly Plaisance (FR)
(74) Mandataire: Bloch, Gérard

(56) Documents cités:
- EP-A- 0 374 966
- EP-A- 0 485 873
- WO-A-81/00756
- WO-A-89/03963
- DE-C- 4 110 064
- US-A- 4 646 527

## Description

L'invention concerne la régénération de fluides pollués tels que, notamment, les fluides frigorigènes de type CFC (chlorofluoro carbure), HCFC (hydrochlorofluorocarbure), HFC (hydrofluorocarbure) dont la récupération après usage, et la réutilisation ultérieure présentent un double intérêt, économique et écologique. En effet, de tels fluides sont non seulement coûteux, mais leur dégazage dans l'atmosphère a également un effet néfaste sur l'environnement.

La régénération du fluide considéré vise à remettre dans des spécifications déterminées certaines des caractéristiques du fluide relatives notamment aux résidus non volatiles, à l'humidité, à l'acidité, à la présence de particules, et aux incondensables.

Avant de régénérer un fluide frigorigène usagé, on le récupère au préalable en vidant l'installation frigorifique et en le transférant dans des emballages.

Lors de la régénération, généralement, on transfère le fluide pollué de l'emballage dans un séparateur que l'on chauffe afin de faire passer le fluide en phase vapeur. Au fur et à mesure que l'on chauffe, on aspire la phase vapeur du séparateur en laissant les résidus non volatiles du fluide pollué au fond du séparateur. Puis on liquéfie à nouveau la phase vapeur que l'on déshydrate, désacidifie et filtre. Enfin, on stocke le fluide régénéré obtenu, et à nouveau utilisable ultérieurement.

Un tel procédé de purification occasionne des pertes non négligeables de fluide, notamment lors de connexions et déconnexions ou encore à cause d'éventuelles fuites. En outre, après le stockage du fluide régénéré, l'installation de régénération contient encore du fluide résiduel occupant son volume intérieur utile, avec une densité fixée par la pression résiduelle à l'intérieur de l'installation, de telles pertes étant proportionnelles au volume intérieur utile de l'installation et à la densité du fluide.

Le procédé de régénération mis en oeuvre jusqu'alors présente également l'inconvénient d'être dédié à un seul produit et le changement de type de produit implique une opération coûteuse en temps et en pertes.

L'invention vise à pallier ces inconvénients.

Procédé de régénération d'un fluide pollué par des résidus non volatiles, dans lequel on sépare les résidus non volatiles du fluide en faisant passer ledit fluide en une phase vapeur, on aspire la vapeur dans une installation de régénération où elle est liquéfiée en un fluide régénéré qui est ensuite stocké dans un réservoir, caractérisé par le fait que
on stocke le fluide pollué dans un emballage de récupération avec une entrée-sortie de fluide et un robinet d'accès à son "ciel gazeux,
on raccorde ladite entrée-sortie de fluide à un point de raccord de ladite installation de régénération,
on fait passer la phase gazeuse de l'emballage dans ladite installation de régénération.

Ainsi, on supprime l'opération de transfert, l'emballage ayant le double rôle de stockage de fluide récupéré et de séparateur, grâce à quoi on diminue le volume de pertes de fluide. Le procédé de l'invention présente une flexibilité qui le rend polyvalent sans augmentation de coût rédhibitoire.

Avantageusement, afin de faire passer le fluide en phase vapeur dans l'emballage, on chauffe l'emballage.

Avantageusement encore, après le stockage du fluide régénéré, on pompe à vide le fluide résiduel dans l'installation et l'emballage et les canalisations voisines.

On diminue ainsi la pression et donc la densité du fluide à l'intérieur de l'emballage, et en conséquence les pertes de fluide sont considérablement réduites.

Dans un mode de mise en oeuvre préféré du procédé, la liquéfaction de la phase vapeur s'effectuant dans un équipement de liquéfaction, après stockage du fluide régénéré, on isole l'équipement de liquéfaction de l'installation, et on pompe à vide le fluide résiduel de l'équipement de liquéfaction.

De préférence encore, on filtre, on déshydrate, et on désacidifie le fluide à nouveau liquéfié avant de le stocker.

Dans ce cas, et avantageusement, après stockage du fluide régénéré, on isole l'ensemble des équipements de liquéfaction, de filtration, de déshydratation et de désacidification, et on pompe à vide le fluide résiduel de l'ensemble desdits équipements.

L'invention concerne également une installation de régénération de fluide pollué par des résidus non volatiles et stocké à l'intérieur d'un emballage selon la revendication 7.

De préférence, les moyens pour faire passer le fluide en phase vapeur comprennent un dispositif de chauffage.

Avantageusement, l'installation comprend une pompe à vide comprenant une entrée reliée à la sortie d'une vanne de pompage de phase vapeur dans l'emballage, et une sortie reliée à l'entrée de l'équipement d'aspiration.

La sortie de l'équipement d'aspiration est avantageusement aussi reliée directement au réservoir de stockage.

En outre, un filtre peut être interposé entre la pompe à vide et l'équipement d'aspiration.

Enfin, dans une forme de réalisation préférée, l'équipement de liquéfaction est associé à des équipements de filtrage, de désacidification et de déshydratation.

Dans ce cas, la sortie de ces équipements est avantageusement aussi reliée à l'entrée de la pompe à vide.

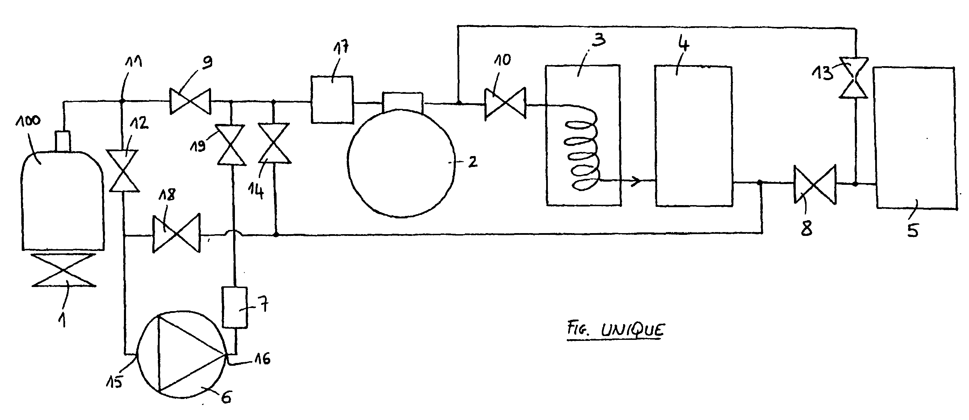

L'invention sera mieux comprise à l'aide de la description suivante d'un mode de mise en oeuvre préféré du procédé de régénération de fluide pollué par des résidus non volatiles, et d'une forme de réalisation préférée de l'installation de régénération pour la mise en oeuvre du procédé, en référence à la figure unique annexée qui représente un schéma de l'installation.

Le procédé et l'installation de régénération sont destinés à régénérer le fluide pollué, en remettant dans des spécifications déterminées certaines caractéristiques du fluide relatives ici aux résidus non volatiles, à l'humidité, à l'acidité, à la présence de particules et aux incondensables.

Le fluide pollué, en l'espèce un des fluides frigorigènes usagés mentionnés ci-dessus, provenant d'une installation frigorifique, est récupéré et stocké dans un emballage de récupération 100, équipé d'un robinet d'accès à son "ciel" gazeux afin d'être régénéré.

L'installation de régénération comprend:
- un dispositif de chauffage 1 destiné à chauffer l'emballage 100,
- un compresseur d'aspiration 2 à une entrée et une sortie, l'entrée étant reliée à la sortie d'un robinet 9 d'accès de l'emballage 100 à son ciel gazeux.
- un condenseur de liquéfaction 3 comprenant une entrée reliée à la sortie du compresseur 2, avec interposition d'une vanne d'isolement 10, et une sortie raccordée à l'entrée d'un ensemble de régénération 4 comprenant des équipements de filtrage, de désacidification, et de déshydratation, et
- un réservoir 5 de stockage de fluide régénéré présentant une entrée communiquant avec une sortie de l'ensemble de régénération 4, avec interposition d'une vanne d'isolement 8.

En outre, l'installation comprend une pompe à vide 6, ici à anneau liquide huile, pourvue d'une entrée 15 et d'une sortie 16.

L'entrée 15 de la pompe à vide 6 est raccordée à l'entrée du robinet 9, par l'intermédiaire d'une vanne de pompage 12 La sortie 16 de la pompe à vide 6 est raccordée à l'entrée du compresseur 2, avec interposition d'un filtre 7 destiné à retenir les éventuels polluants générés par la pompe à vide pour son propre fonctionnement. Une vanne d'isolement 19 est interposée à la sortie du filtre 7. La sortie de l'ensemble de régénération 4 est également reliée, par l'intermédiaire d'une vanne de pompage 14, à l'entrée d'aspiration du compresseur 2 et, par l'intermédiaire d'une autre vanne de pompage 18, à l'entrée 15 de la pompe à vide 6. Un dispositif "anti-coup" de liquide 17 peut être disposé entre l'entrée d'aspiration du compresseur 2 et les vannes 14, 19.

Enfin, la sortie du compresseur 2 est aussi reliée directement au réservoir de stockage 5, avec interposition d'une vanne de pompage 13.

Le procédé de régénération correspondant au fonctionnement de l'installation décrite ci-dessus, va maintenant être décrit.

Afin de régénérer le fluide pollué, on place son emballage 100 sur le dispositif de chauffage 1. On raccorde l'entrée-sortie de l'emballage 100 à un point de raccord 11 situé entre l'entrée du robinet 9 et l'entrée de la vanne de pompage 12, et on ouvre uniquement le robinet 9 et les vannes 10 et 8.

On chauffe alors, si nécessaire, l'emballage 100 afin de faire passer le fluide qu'il contient en phase vapeur, à l'intérieur de l'emballage 100. On aspire la phase vapeur de l'emballage 100 dans l'installation de régénération, à l'aide du compresseur 2, en laissant les résidus non volatiles polluant le fluide au fond de l'emballage 100, au fur et à mesure que le fluide passe à son état vapeur. Ainsi, c'est à l'intérieur de l'emballage 100 que l'on sépare les résidus non volatiles du fluide.

Après la séparation, on liquéfie à nouveau le fluide partiellement régénéré, ne contenant plus de résidus non volatiles, à l'aide du condenseur 3. Puis, dans l'ensemble de régénération 4, on filtre, on désacidifie et on enlève l'eau du fluide liquéfié à nouveau avant de le stocker complètement régénéré, dans le réservoir 5.

On notera que le fluide est transféré en continu de l'emballage 100 au réservoir de stockage 5, par passage à travers le compresseur 2, le condenseur 3 et l'ensemble de régénération 4, jusqu'à ce que le compresseur 2 ait atteint un seuil limite d'aspiration.

Après le stockage du fluide complètement régénéré, il reste, dans l'emballage 100 du fluide résiduel avec une densité dépendant de la pression effective résiduelle à l'intérieur de l'emballage 100, elle-même fixée par le seuil limite d'aspiration du compresseur 2, et ici sensiblement égale la pression atmosphérique. Il reste également, dans le volume utile de l'installation de régération, du fluide résiduel essentiellement dans son état liquide.

Pour le pompage, on pompe d'abord à vide le fluide résiduel dans l'emballage 100 et dans les conduites voisines, après avoir fermé le robinet 9 et ouvert la vanne de pompage 12 et la vanne d'isolement 19. Sous l'action du pompage, on tire le fluide résiduel, sous forme de phase vapeur et ne contenant donc plus de résidus non volatiles, de l'emballage 100. Le fluide traverse la pompe à vide 6, le filtre 7, le compresseur 2, est liquéfié par le condenseur 3 puis filtré, désacidifié et déshydraté avant d'être stocké, complètement régénéré, dans le réservoir 5. Sous l'action de la pompe à vide, la pression résiduelle dans l'emballage 100 est réduite jusqu'à une valeur inférieure à 0,045 bar absolu, diminuant ainsi la densité du fluide résiduel dans l'emballage 100.

Puis, on transfère partiellement à vide le fluide résiduel dans le condenseur 3, l'ensemble de régénération 4 et les canalisations voisines, après avoir fermé la vanne de pompage 12, ouvert les autres vannes de pompage 14 et 13, et isolé le condenseur 3 et l'ensemble de régénération 4 en fermant les vannes 8 et 10. Les vannes 18 et 19 étant fermées, sous l'action de l'aspiration du compresseur 2, on tire partiellement le fluide résiduel de cette partie de l'installation jusqu'à obtention d'une pression résiduelle voisine de la pression atmosphérique. En fermant la vanne 14 et en ouvrant les vannes 18 et 19, on raccorde l'entrée 15 de la pompe à vide 6 à la sortie de l'ensemble de régénération 4, ce qui permet de réduire la pression résiduelle dans cette partie de l'installation jusqu'à une valeur de 0,045 bar absolu, diminuant ainsi la densité du fluide résiduel dans l'installation.

Pour ces opérations, la sortie du compresseur 2 est reliée directement au réservoir de stockage 5 par ouverture de la vanne 13.

Avantageusement, un dispositif de chauffage est placé dans l'ensemble de régénération 4 afin, si nécessaire, de provoquer le passage de fluide qu'il contient en phase vapeur.

On vient de décrire un procédé et une installation de régénération destiné à régénérer le fluide contenu dans un emballage. Bien entendu, dans la pratique, on régénère simultanément les fluides d'une pluralité d'emballages, à l'aide d'un dispositif de chauffage destiné à chauffer la pluralité d'emballages, et d'un réservoir de stockage de capacité adaptée.

A propos de la pompe à vide 6 à anneau liquide huile et du filtre à liquide 7, ils pourraient être remplacés par une seule pompe à vide sèche.

## Revendications

1. Procédé de régénération d'un fluide pollué par des résidus non volatiles, dans lequel on sépare les résidus non volatiles du fluide en faisant passer ledit fluide en une phase vapeur, on aspire la vapeur dans une installation de régénération où elle est liquéfiée en un fluide régénéré qui est ensuite stocké dans un réservoir, **caractérisé par le fait que**
on stocke le fluide pollué dans un emballage de récupération (100) avec une entrée-sortie de fluide et un robinet d'accès à son "ciel" gazeux,
on raccorde ladite entrée-sortie de fluide à un point de raccord (11) de ladite installation de régénération,
on fait passer la phase gazeuse de l'emballage dans ladite installation de régénération.

2. Procédé de régénération selon la revendication 1, dans lequel afin de faire passer le fluide en phase vapeur dans l'emballage (100), on chauffe l'emballage (100).

3. Procédé de régénération selon l'une des revendications 1 et 2, dans lequel après le stockage du fluide régénéré, on pompe à vide le fluide résiduel dans l'emballage (100) et les canalisations voisines.

4. Procédé de régénération selon l'une des revendications 1 à 3, dans lequel la liquéfaction de la phase vapeur s'effectuant dans un équipement de liquéfaction (3), après stockage du fluide régénéré, on isole l'équipement de liquéfaction (3) de l'installation, et on pompe à vide le fluide résiduel de l'équipement de liquéfaction (3).

5. Procédé de régénération selon l'une des revendication 1 à 4, dans lequel on filtre, on déshydrate, et on désacidifie le fluide à nouveau liquéfié avant de le stocker.

6. Procédé de régénération selon la revendication 5, dans lequel après stockage du fluide régénéré, on isole l'ensemble (3, 4) des équipements de liquéfaction, de filtration, de déshydratation et de désacidification, et on pompe à vide le fluide résiduel de l'ensemble (3, 4) desdits équipements.

7. Installation de régénération de fluide pollué par des résidus non volatiles et stocké à l'intérieur d'un emballage de récupération (100), selon le procédé de la revendication 1, comprenant en outre
- l'emballage de récupération ayant une entrée-sortie de fluide et un robinet d'accès à son "ciel" gazeux,
- des moyens (1) pour faire passer le fluide en phase vapeur à l'intérieur de l'emballage (100),
- un équipement d'aspiration de la phase vapeur comprenant une entrée raccordée à la sortie d'un robinet (9) relié à un point de raccord (11), et une sortie reliée à l'entrée d'un équipement de liquéfaction (3) communiquant en sortie avec un réservoir de stockage (5).

8. Installation de régénération selon la revendication 7, dans laquelle les moyens pour faire passer le fluide en phase vapeur comprennent un dispositif de chauffage (1).

9. Installation de régénération selon l'une des revendications 7 et 8, dans laquelle il est prévu une pompe à vide (6) comprenant une entrée (15) reliée à la sortie d'une vanne (12) de pompage de phase vapeur dans l'emballage (100), et une sortie (16) reliée à l'entrée de l'équipement d'aspiration (2).

10. Installation de régénération selon l'une des revendications 7 à 9, dans laquelle la sortie de l'équipement d'aspiration (2) est aussi reliée directement au réservoir de stockage (5).

11. Installation de régénération selon l'une des revendications 9 et 10, dans laquelle un filtre (7) est interposé entre la pompe à vide (6) et l'équipement d'aspiration (2).

12. Installation de régénération selon l'une des revendications 7 à 11, dans laquelle l'équipement de liquéfaction (3) est associé à des équipements (4) de filtrage, de désacidification et de déshydratation.

13. Installation de régénération selon la revendication 12, dans laquelle l'entrée (15) de la pompe à vide (6) est aussi reliée à la sortie desdits équipements (4).

## Patentansprüche

1. Verfahren zur Regeneration eines mit nicht flüchtigen Rückständen verunreinigten Fluids, wobei man die nicht flüchtigen Rückstände von dem Fluid trennt, indem man das Fluid in die Dampfphase überführt, den Dampf in eine Regenerationseinlage ansaugt, wo er zu einem regenerierten Fluid verflüssigt wird, das danach in einem Reservoir gespeichert wird, **dadurch gekennzeichnet, daß**
man das verunreinigte Fluid in einem Rückgewinnungsbehältnis (100) mit einem Fluideinlaß/auslaß und einem Ventil für den Zugriff auf dessen gasförmige "Glocke" speichert,
man den Fluideinlaß/auslaß mit einem Verbindungspunkt (11) der Regenerationseinlage verbindet,
man die Gasphase aus dem Behältnis in die Regenerationseinlage überführt.

2. Regenerationsverfahren nach Anspruch 1, wobei man das Behältnis (100) erhitzt, um das Fluid in dem Behältnis (100) in die Dampfphase zu überführen.

3. Regenerationsverfahren nach Anspruch 1 oder 2, wobei man nach der Speicherung des regenerierten Fluids das in dem Behältnis (100) und den benachbarten Leitungen verbleibende Fluid abpumpt.

4. Regenerationsverfahren nach einem der Ansprüche 1 bis 3, wobei die Verflüssigung der Dampfphase in einer Verflüssigungsvorrichtung (3) erfolgt, und man nach der Speicherung des regenerierten Fluids die Verflüssigungsvorrichtung (3) von der Einlage trennt und das verbleibende Fluid aus der Verflüssigungsvorrichtung (3) abpumpt.

5. Regenerationsverfahren nach einem der Ansprüche 1 bis 4, wobei man das erneut verflüssigte Fluid vor dessen Speicherung filtriert, dehydratisiert und entsäuert.

6. Regenerationsverfahren nach Anspruch 5, wobei man nach der Speicherung des regenerierten Fluid die Baugruppe (3, 4) der Vorrichtungen zur Verflüssigung, Filtrierung, Dehydratisierung und Entsäuerung isoliert und das verbleibende Fluid aus der Baugruppe (3, 4) der Vorrichtungen abpumpt.

7. Anlage zur Regeneration eines mit nicht flüchtigen Rückständen verunreinigten und im Inneren eines Rückgewinnungsbehältnis (100) gespeicherten Fluids gemäß dem Verfahren nach Anspruch 1, wobei ferner vorgesehen ist,
- daß das Rückgewinnungsbehältnis einen Fluideinlaß/auslaß und ein Ventil für den Zugriff zu dessen gasförmiger "Glocke" aufweist,
- Mittel (1), um die Flüssigkeit im Inneren des Behältnisses (100) in die Dampfphase zu überführen,
- eine Vorrichtung zum Ansaugen der Dampfphase mit einem Eingang, der mit dem Ausgang eines an einen Verbindungspunkt (11) angeschlossenen Ventils (9) verbunden ist, und mit einem Ausgang, der mit dem Eingang einer Verflüssigungsvorrichtung (3) verbunden ist, die ausgangsseitig mit einem Speicherreservoir (5) in Verbindung steht.

8. Regenerationsanlage nach Anspruch 7, wobei die Mittel, um die Flüssigkeit in die Dampfphase zu überführen, eine Heizvorrichtung (1) enthalten.

9. Regenerationsanlage nach Anspruch 7 oder 8, wobei eine Saugpumpe (6) versehen ist mit einem Eingang (15), der mit dem Ausgang eines Ventils (12) zum Pumpen der Dampfphase in das Behältnis (100) verbunden ist, und mit einem mit der Ansaugvorrichtung (2) verbundenen Ausgang (16).

10. Regenerationsanlage nach einem der Ansprüche 7 bis 9, wobei der Ausgang der Ansaugvorrichtung (2) auch direkt mit dem Speicherreservoir (5) verbunden ist.

11. Regenerationsanlage nach Anspruch 9 oder 10, wobei ein Filter (7) zwischen der Saugpumpe (6) und der Ansaugvorrichtung (2) angeordnet ist.

12. Regenerationsanlage nach einem der Ansprüche 7 bis 11, wobei die Verflüssigungsvorrichtung (3) mit Vorrichtungen (4) zur Filtrierung, Entsäuerung und Dehydratisierung verbunden ist.

13. Regenerationsanlage nach Anspruch 12, wobei der Eingang (15) der Saugpumpe (6) auch mit dem Ausgang der genannten Vorrichtungen (4) verbunden ist.

## Claims

1. Process for regenerating a fluid polluted by non volatile residues, wherein the non volatile residues are separated from the fluid, by turning the said fluid to a vapour phase, the vapour phase is then aspirated into a regenerating installation, where it is liquefied into a regenerated fluid, which is then stored in a reservoir, **characterised by** the fact that the polluted fluid is stored in a recovery chamber (100) with a fluid entry/exit point and a tap at its gaseous 'ceiling', the said fluid entry/exit point is connected to a connection point (11) on the said regenerating installation, and the gaseous phase of the chamber is sent to the said regenerating installation.

2. Regeneration process according to claim 1, wherein, in order to have the fluid turned to vapour phase in the chamber (100), the chamber (100) is heated.

3. Regeneration process according to either of claims 1 and 2, wherein, after the regenerated fluid has been stored, the residual fluid is vacuum pumped from the chamber (100) and the neighbouring pipes.

4. Regeneration process according to any of claims 1 to 3, wherein liquefaction of the vapour phase occurs in a liquefaction device (3) and, when the regenerated fluid has been stored, the liquefaction device (3) is separated from the installation, and the residual fluid is vacuum pumped from the liquefaction device (3).

5. Regeneration process according to any of claims 1 to 4, wherein the newly liquefied fluid is filtered, dehydrated, de-acidified prior to be stored.

6. Regeneration process according to claim 5, wherein, when the regenerated fluid has been stored, the assembly (3, 4) of the liquefaction, filtration, de-hydration and de-acidification devices is isolated and the residual fluid is vacuum pumped from the assembly (3,4) of said devices.

7. Installation for regenerating fluid polluted by non volatile residues and stored inside a recovery chamber (100), according to the process of claim 1, moreover comprising
- the recovery chamber having a fluid entry/exit point and a tap at its gaseous 'ceiling',
- means (1) for turning the fluid to vapour phase inside the chamber (100),
- an aspiration device for the vapour phase with an inlet connected to the outlet of a tap (9) connected to a connection point (11), and an outlet connected to the inlet of a liquefaction device (3) communicating by an outlet with a storage reservoir (5).

8. Regeneration installation according to claim 7, wherein the means for turning the fluid to vapour phase include a heating device (1).

9. Regeneration installation according to either one of claims 7 and 8, wherein a vacuum pump (6) is provided with an inlet (15) connected to the outlet of a valve (12) for pumping the vapour phase in the chamber (100) and an outlet (16) connected to the inlet on the aspiration device (2).

10. Regeneration installation according to any one of claims 7 to 9, wherein the outlet of the aspiration device (2) is also directly connected to the storage reservoir (5).

11. Regeneration installation according to either one of claims 9 and 10, wherein a filter (7) is interposed between the vacuum pump (6) and the aspiration device (2).

12. Regeneration installation according to any one of claims 7 to 11, wherein the liquefaction device (3) is associated to filtration, de-acidification and de-hydration devices (4).

13. Regeneration installation according to claim 12, wherein the inlet (15) of the vacuum pump (6) is also connected to the outlet of the said devices (4).
